# EUROPEAN PATENT APPLICATION

(11) **EP 3 451 673 A1**
(43) Date of publication of application: **06.03.2019**
(21) Application number: 18156477.4
(22) Date of filing: 13.02.2018
(51) Int. Cl.: H04N 21/234

(54) **VIDEO SPLICING FOR INSERTING REGIONAL CONTENT INTO A COMPRESSED DIGITAL VIDEO STREAM**

(30) Priority: 30.08.2017 US 201715690896
(71) Applicant: Rohde & Schwarz GmbH & Co. KG, 81671 München (DE)
(72) Inventor: GÖRIG, Torsten, 15566 Schöneiche (DE)
(74) Representative: Isarpatent

(57) **Abstract**

A video distribution system for inserting regional content into a compressed digital video stream may comprise a central headend that identifies a number of predetermined frame positions in a source digital video stream and compresses the digital video stream into the compressed digital video stream providing intra-coded frames at the identified positions in the compressed digital video stream, and a regional headend that receives the compressed video stream and inserts a regional compressed video section into the compressed video stream at the intra-coded frames.

## Description

### TECHNICAL FIELD

The present invention relates to a video distribution system for inserting regional content into a compressed digital video stream. The present invention further relates to a respective video distribution method.

### BACKGROUND

Although applicable in principal to any video cutting system, the present invention and its underlying problem will be hereinafter described in combination with insertion of regional content in videos.

In television broadcasting local content insertion, commercial insertion, promo insertion, studio routing, camera switching, tape editing, and the like are basic operations. In digital data streams, like for example in the Motion Picture Experts Group (MPEG) standards, switching or "splicing" of video bitstreams may be complicated. The MPEG-2 standard supports such splicing operations with "splice points" where e.g. a commercial may be substituted for e.g. a main program in a video stream.

Especially with compressed video splicing may be more difficult than with uncompressed video. In compressed video like MPEG videos a large part of the compression is achieved by sending only the changes between different video frames. A MPEG video stream may therefore consist of so called I-frames or intra-coded frames that are compressed without motion prediction. In addition, P-frames are used to predict the frame from a previous P-frame or from an intra-coded I-frame in the video stream. A full frame can be reconstructed from an I-frame without reference to any other frame. For reconstructing a frame from a P-frame at least a previous P-frame or I-frame is necessary. Therefore, splicing or switching of video content in a compressed video stream may only be performed at I-frames.

If regional content is inserted into a digital video stream at a regional headend, the regional headend is limited to the I-frames of the video stream or needs to re-encode part of the video stream. Re-encoding allows inserting the regional content seamlessly at the required position but requires additional encoding at the regional headend.

### SUMMARY

Against this background, the problem addressed by the present invention is allowing more flexible video splicing with reduced effort.

The present invention solves this problem by a video distribution system having the features of claim 1, and by a video distribution method having the features of claim 11.

Accordingly it is provided:
- A video distribution system for inserting regional content into a compressed digital video stream, the video distribution system comprising a central headend that identifies a number, i.e. one or more, of predetermined frame positions in a source digital video stream and compresses the digital video stream into the compressed digital video stream providing intra-coded frames at the identified positions in the compressed digital video stream, and a regional headend that receives the compressed video stream and inserts a regional compressed video section into the compressed video stream at the intra-coded frames.
- A video distribution method for inserting regional content into a compressed digital video stream, the video distribution method comprising identifying a number of predetermined frame positions in a source digital video stream, compressing the digital video stream into the compressed digital video stream providing intra-coded frames at the identified positions in the compressed digital video stream, and regionally inserting a regional compressed video section into the compressed video stream at the intra-coded frames.

The present invention is based on the finding that splicing videos only at already present intra-frames may require complex re-encoding if regional content is to be inserted at an arbitrary frame, especially if that frame is not an intra-coded-frame or intra-frame.

The present invention therefore provides a video distribution system that may specifically prepare a compressed video in advance for regional content insertion. The local headend may then find intra-frames at exactly the frame position that is required or chosen for the insertion of the regional compressed video section. Local re-encoding in the regional headend is therefore not required. The term intra-frame in the context of this application refers to a type of frame in the encoded or compressed digital video stream that allows reconstructing a complete frame on the receiver side without any additional image information. The intra-frame may e.g. comprise a full image in a compressed format.

Inserting an intra-frame may close a preceding Group of Pictures, GOP, and start a new GOP, if the used video format uses GOPs.

The central headend may identify a number of frame positions. These frame positions may be the predetermined frame positions for the insertion of the regional content, also called regional compressed video section. A predetermined frame position may e.g. refer to the start frame of the regional content. Multiple such predetermined frame position referring to start frames may be provided. It is understood, that other predetermined frame positions may refer to the end frames of the regional contents.

It is however understood, that a predetermined frame position referring to the end of the regional content is not necessarily required. In this case the regional content may e.g. not replace a section of the original compressed video stream but add to the original compressed video stream. The length of the original compressed video stream will therefore increase in this case by the length of the regional compressed video section.

The predetermined frame positions may e.g. refer to explicit frame numbers or to so called presentation timestamps. Presentation timestamps or PTS may e.g. be timestamp metadata fields in a compressed video transport stream, like e.g. an MPEG transport stream or MPEG program stream. The PTS may e.g. be used to synchronize programs' separate elementary streams like e.g. video, audio and subtitles when presented to the viewer. The PTS may be given in units related to a program's overall clock reference, like e.g. a Program Clock Reference, PCR, or System Clock Reference, SCR. These clock references may also be transmitted in the transport stream or program stream.

The PTSs may have a resolution of 90kHz. This resolution is suitable for the presentation synchronization. The PCR or SCR may have a higher resolution of e.g. 27MHz. This resolution is suitable for synchronization of e.g. a decoder's overall clock with that of the remote encoder.

After insertion of the intra-frames by the central headend, the compressed video is provided to the regional headend. The compressed video may be provided via any possible communication interface to the regional headend. For example, a wireless or wired communication interface, like e.g. a satellite interface or a cable interface may be provided to transport the regional compressed video section to the regional headend. The compressed video may also be provided to the regional headend via a network, like e.g. the internet.

The regional headend then splits the video at the intra-frames and inserts the regional compressed video section at the respective position. Splitting refers to inserting the first frame of the regional compressed video section at the position of the respective intra-frame. This means that the intra-frame will be replaced by the first frame of the regional compressed video section. It is understood, that this first frame may also be an intra-frame. It is further understood, that the regional headend may provide the replaced intra-frame as the first frame after the inserted regional compressed video section. This means that the regional headend interleaves the regional compressed video section with the original compressed video stream. As an alternative the regional headend may replace a section of the original compressed video stream. Such a section that is to be replaced may start in the original compressed video stream with an intra-frame and another intra-frame may be provided at the first frame after this section.

The resulting compressed video stream with the regional compressed video section may then be provided to the final consumers, like e.g. TV sets or set top boxes or the like for playback.

With the present invention it is therefore possible to provide compressed video streams with regional compressed video sections without requiring re-encoding of the compressed video stream in the regional headend.

Further embodiments of the present invention are subject of the further subclaims and of the following description, referring to the drawings.

In a possible embodiment, the central headend may comprise a central video encoder that identifies the predetermined frame positions in the source digital video stream and encodes the digital video stream into the compressed digital video stream with intra-coded frames at the predetermined frame positions.

The central video encoder may be a hardware or software based central video encoder or comprise a combination of hardware and software. Such hardware may e.g. comprise dedicated encoders, like e.g. FPGA or ASIC based encoders. A general purpose processor may e.g. be connected to a memory comprising instructions that cause the general purpose processor to coordinate the encoding by the FPGAs or ASICs. It is understood, that a purely software based encoding on the general purpose processor is also possible.

The central video encoder may encode or compress the digital video stream according to any format that uses intra-frames. Such formats may e.g. be the MPEG-2 or MPEG-4 video compression format. Other possible formats comprise the HEVC, The-ora, VP9 or AV1 formats.

In a possible embodiment, the central headend may comprise a playout manager coupled to the central video encoder, wherein the playout manager may provide the central video encoder with the predetermined frame positions.

The playout manager may be a coordinator for the playout of the compressed video stream. In broadcasting, the term "playout" refers to the transmission of e.g. TV channels from the broadcaster into broadcast networks that deliver the content to the receivers. The playout manager may therefore coordinate the playout of the common content, i.e. the original digital video stream. In addition, the playout manager may also coordinate the playout of the regional content, i.e. the regional compressed video sections. Coordinating the playout of the regional content in this context refers to the playout manager at least knowing where the regional content is to be inserted into the original digital video stream and providing the respective predetermined frame positions to the central video encoder.

The playout manager may e.g. be controlled by operators that decide which regional content is to be inserted at which position of the original digital video stream.

Regional content may e.g. refer to regional news, commercials, TV shows and the like. It is understood, that regional content may refer to any type of content that is not commonly delivered to all media consumers but only to a regionally limited number of media consumers.

In a possible embodiment, the central video encoder may comprise an indication generator that generates indications in the compressed video stream that indicates the occurrences of intra-frames at the predetermined frame positions.

The indication may be seen as a kind of watermark that may easily be identified in the compressed video stream by the regional headend. The indication therefore allows the regional headend to identify the position for starting or ending the insertion of the regional compressed video section in the compressed video stream. This may also be called "inband" signalisation, since no separate indication is necessary that must be transmitted in addition to the video stream. The regional headend does not need to further analyse the compressed video stream but only needs to identify the indication. The indication may e.g. be a flag that may be set or not.

In a possible embodiment, the central headend may comprise a central packetizer that identifies the predetermined frame positions in the source digital video stream and restarts respective packetizing sequences at the predetermined frame positions of the compressed video stream to provide respective packets. The packetizing sequence may e.g. comprise a new chunk in MPEG-Dash and restarting may comprise starting a new chunk. Therefore, instead of only starting a new Group Of Pictures, GOP, a larger unit, the chunk may be provided.

The central packetizer is the device that wraps small chunks of the encoded video data into transport stream packets. Such transport stream packets may comprise multiplexed video, audio and metadata in a single packet. In order to packetize the compressed video stream, the central packetizer may comprise a stream inspector that inspects the compressed video stream just enough to detect the intra-frames. If the central packetizer is capable of detecting intra-frames, the central packetizer may also start a new packet, i.e. restart a packetizing sequence, at the respective intra-frame.

This in consequence leads to the compressed video stream being delivered to the regional headend in chunks or packets. At least the chunk or packet that is relevant for insertion of the regional compressed video section may comprise only the intra-frame at the respective predetermined frame position and frames following that intra-frame but no frame preceding the intra-frame.

This further reduces the effort in the regional headend for inserting the regional compressed video section, because in the regional headend no depacketizing of the incoming packets will be necessary. Instead, the respective packet may completely be replaced by the first packet of the regional compressed video section. Restarting the packetization format, e.g. MPEG-Dash, therefore has the advantage that in the packetization format neither the duration nor the size of packets need to be changed after the local content insertion. For example at MPEG-Dash such a packet can be 10 seconds and should not be interrupted by the local content insertion.

It is understood, that in the regional headend either a packetizer may be present for the regional compressed video section or the regional compressed video section may be provided to the regional headend in packetized form from a regional content source.

In a possible embodiment, the central headend may comprise a playout manager coupled to the central packetizer, wherein the playout manager may provide the central packetizer with the predetermined frame positions.

The playout manager may be a coordinator for the playout of the compressed video stream and therefore for the packetizing of the video stream. The above explanation regarding the playout manager for the central video encoder also applies to the playout manager of the central packetizer. The playout manager for the central video encoder may be integrated with the playout manager of the central packetizer.

In a possible embodiment, the central packetizer may comprise an indication generator that generates indications in the packets that indicate the occurrences of intra-frames at the predetermined frame positions.

As with the indication generator of the central video encoder, the indication generator of the central packetizer may also provide indications or watermarks in the packets that may easily be identified in the compressed video stream by the regional headend. No further in-depth analysis of the packets will be necessary.

In a possible embodiment, the central packetizer may provide metadata in the packets based on the predetermined frame positions.

The central packetizer may e.g. comprise a metadata generator that generates the metadata in view of the content of the respective packet. If a packet comprises an intra-frame at one of the predetermined frame positions and the following frames only, the metadata generator may generate respective metadata. The metadata may therefore inform the receiver, e.g. the regional headend of the type of the respective packet.

The regional headend may then simply identify the relevant packet for inserting the regional compressed video section based on the metadata. Instead of replacing specific frames, the regional headend may then replace the respective packets.

In a possible embodiment, the central packetizer may include the metadata in a manifest of the packet.

The manifest may be a junk or file with information about the respective packet. The manifest may comprise a predetermined format and the metadata may be comprised in the manifest. A standard format manifest may easily be parsed by the regional headend to identify the relevant data.

When performing regional content insertion with MPEG-Dash the manifest file carries the respective metadata of the assembled chunks. Changing or pre-amending the manifest file in the central headend prepares or adapts the packetization for the local content. With this pre-prepared metadata, the packetization structure and metadata does not need to be changed after local insertion at the local headend anymore.

In a possible embodiment, the central packetizer may comprise a metadata indication generator that generates indications in the metadata that indicate the occurrences of intra-frames at the predetermined frame positions.

As with the indication generator of the central video encoder, the metadata indication generator may also provide indications or watermarks in the metadata that may easily be identified in the compressed video stream by the regional headend.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a block diagram of an embodiment of a video distribution system according to the present invention;
- Fig. 2: shows a block diagram of another embodiment of a video distribution system according to the present invention;
- Fig. 3: shows a diagram of an embodiment of an encoded video with intra-frames; and
- Fig. 4: shows a flow diagram of an embodiment of a video distribution method according to the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

### DETAILED DESCRIPTION OF THE DRAWINGS

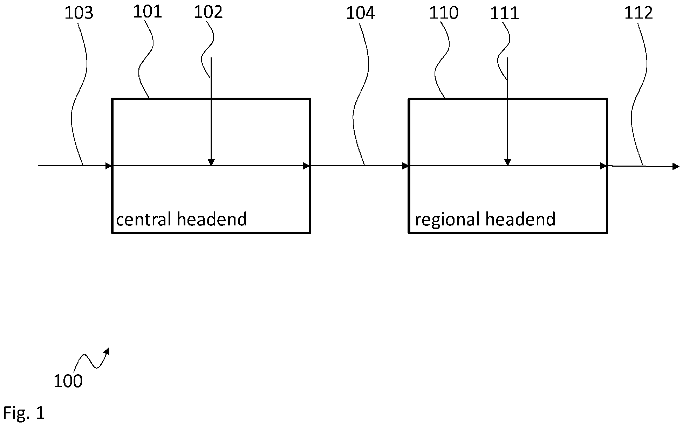

Fig. 1 shows a block diagram of a video distribution system 100. The video distribution system 100 comprises a central headend 101 that is communicatively coupled to a regional headend 110.

The central headend 101 receives a source digital video stream 103 and predetermined frame positions 102. The source digital video stream 103 may e.g. be an uncompressed video stream or an already compressed video stream.

Based on the predetermined frame positions 102 the central headend 101 identifies the respective frames in the source digital video stream 103 and compresses the source digital video stream 103 into a compressed digital video stream 104 that comprises intra-frames at the respective predetermined frame positions 102. Intra-frames are frames that allow reconstructing a frame without further information.

The central headend 101 may e.g. comprise an encoder or a processor that executes computer instructions of an encoder routine for generating the compressed digital video stream 104. The compressed digital video stream 104 may e.g. comprise the already mentioned intra frames. Further, the compressed digital video stream 104 may comprise frames that only provide the changes between the respective frame and the preceding frame or a future frame. Such frames may e.g. be called predictive coded picture frame or P-frame, or bidirectional coded picture frame or B-frames. If the source digital video stream 103 is an already compressed or encoded video stream, the encoder may re-encode the respective sections of the source digital video stream 103.

The predetermined frame positions 102 identify positions or frames in the source digital video stream 103 that necessarily need to be encoded as intra-frames for the regional headend 110 to insert a regional compressed video section 111 at the respective position.

The compressed digital video stream 104 is therefore provided to the regional headend 110. The regional headend 110 then looks in the compressed digital video stream 104 for the intra-frames at the respective positions and replaces the content of the compressed digital video stream 104 with the regional compressed video section 111 starting with the respective intra-frame.

It is understood, that the regional headend 110 may e.g. interleave the regional compressed video section 111 into the compressed digital video stream 104 or may replace the compressed digital video stream 104.

The regional headend 110 then provides a regionalized digital video stream 112 to end-users or distributers, like e.g. TV-sets or set-top boxes or local broadcast distribution stations that distribute the regionalized digital video stream 112 to the end-users.

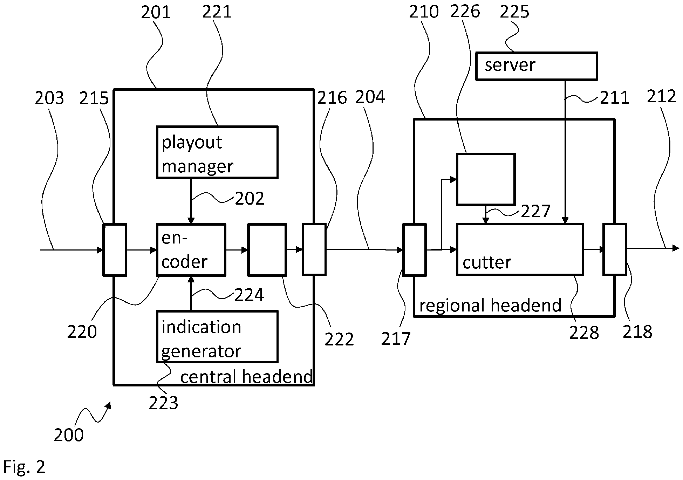

Fig. 2 shows a block diagram of another video distribution system 200. The video distribution system 200 is based on the video distribution system 100 and therefore also comprises a central headend 201 that is communicatively coupled to a regional headend 210.

The central headend 201 comprises a central input interface 215 for receiving the source digital video stream 203. The central input interface 215 may e.g. comprise a digital network interface that couples the central headend 201 to a video source, e.g. a video server. The central input interface 215 may also comprise e.g. a hard disk drive interface, like e.g. a SATA interface, a SCSI interface, an IDE interface or the like. It is understood, that any other interface is possible that allows providing the source digital video stream 203 to the central headend 201.

In the central headend 201 a central video encoder 220 is coupled to the central input interface 215 and receives the source digital video stream 203 for encoding to a predetermined encoding standard.

Further, a playout manager 221 is provided in the central headend 201 that provides the predetermined frame positions 202 to the central video encoder 220. The central video encoder 220 maps the predetermined frame positions 202 to frames in the source digital video stream 203 and encodes the respective frames with intra-frames. It is understood, that the central video encoder 220 may encode the further frames of the source digital video stream 203 as it seems adequate. The type of encoding of the single frames may e.g. be determined by an analysis unit in the central video encoder 220 that analyses the source digital video stream 203 and determines the most effective encoding for the single frames.

The encoded video is then provided to a central packetizer 222 that divides the encoded video stream into small chunks or packets together with respective audio and other data, like e.g. subtitles or metadata. The single packets in sequence then form the compressed digital video stream 204 that is provided from the central packetizer 222 via a central output interface 216 to the regional headend 210. It is understood, that although only one regional headend 210 is shown, the central headend 201 may provide the compressed digital video stream 204 to a plurality of regional headends 210.

The central headend 201 further comprises an indication generator 223. The indication generator 223 generates an indication 224 that marks or indicates an intra-frame at a respective predetermined frame position.

In the central headend 201 the indication generator 223 is coupled to the central video encoder 220. The central video encoder 220 may then e.g. include the indication 224 as a kind of watermark in the single intra-frames or in metadata of the respective intra-frame. As an alternative, the indication generator 223 may e.g. provide the indication 224 to the central packetizer 222. The central packetizer 222 may then include the indication 224 into the single packets.

In the regional headend 210 the compressed digital video stream 204 is received via a regional input interface 217. Although not explicitly shown, it is understood, that the central output interface 216 and the regional input interface 217 may e.g. be network interfaces that are directly coupled to each other via dedicated data lines or a network like e.g. the internet. Further, the central output interface 216 and the regional input interface 217 may also be wireless interfaces that are e.g. coupled via a terrestrial wireless communication line or via a satellite communication line.

In the regional headend 210 the compressed digital video stream 204 is processed by a triggering unit 226 and a cutter 228. The triggering unit 226 analyses the compressed digital video stream 204 for the occurrence of an intra-frame at one of the predetermined frame positions. The triggering unit 226 may e.g. look for the indication 224.

If the triggering unit 226 detects a respective intra-frame, the triggering unit 226 provides a respective trigger 227 to the cutter 228. The cutter 228 will then cut the compressed digital video stream 204 at the respective frame and insert the regional compressed video section 211 at the respective frame position.

In the regional headend 210 the regional compressed video section 211 is provided by content server 225. It is understood, that the content server 225 is just exemplarily shown and that any other video source may also be used. Such a source may e.g. comprise a hard disk drive, a local or regional video studio or the like.

After insertion of the regional compressed video section 211 by the cutter 228, the regionalized digital video stream 212 is output via regional output interface 218 to end-users.

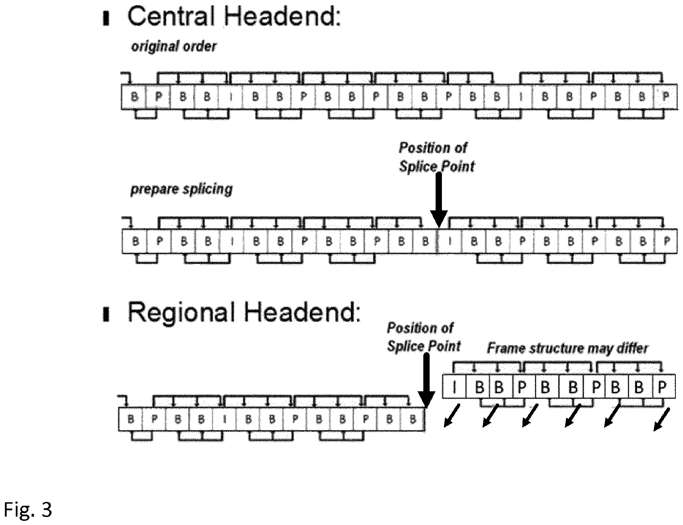

Fig. 3 shows a diagram of an embodiment of a video stream with intra-frames, B-frames and P-frames, prior to and after insertion of the intra-frames by the central headend 101, 201 and after insertion of the regional compressed video section 111, 211 in the regional headend 110, 210.

The upper display of the video stream shows the video stream without the inserted intra-frame at the predetermined frame position. It can however be seen, that the video stream already comprises intra-frames, shown as frames with an "I". These intra-frames are intra-frames that have been inserted because of the configuration of the encoder or because the respective frames have been identified as candidates for inserting an intra-frame. As explained above, an encoder may analyze the source digital video stream 103, 203 to determine, which frame is to be encoded as intra-frame, as P-frame or as B-frame.

In the middle the video stream is shown with the newly inserted intra-frame, where before the video stream comprised a P-frame. The such-modified video stream may then be provided to a regional headend 110, 210.

The regional headend 110, 210 may then cut the video stream at the inserted intra-frame and insert the regional compressed video section 111, 211 as shown in the bottom display of the video stream.

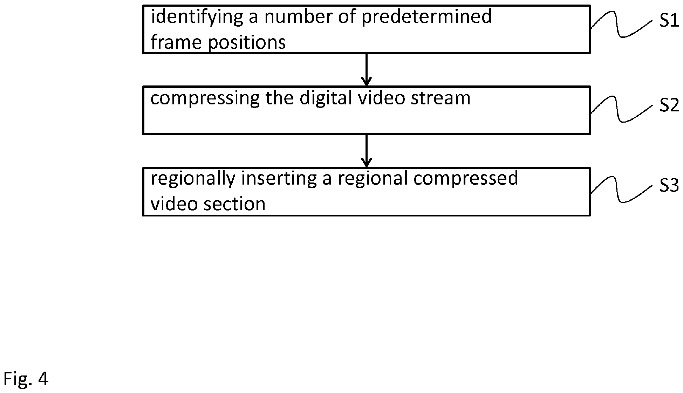

For sake of clarity in the following description of the method based Fig. 4 the reference signs used above in the description of apparatus based Figs. 1 - 3 will be maintained.

Fig. 4 shows a flow diagram of an embodiment of a video distribution method for inserting regional content 111, 211 into a compressed digital video stream 104, 204.

The video distribution method comprises identifying S1 a number of predetermined frame positions 102, 202 in a source digital video stream 103, 203, compressing S2 the digital video stream into the compressed digital video stream 104, 204 providing intra-coded frames at the identified positions in the compressed digital video stream 104, 204, and regionally inserting S3 a regional compressed video section 111, 211 into the compressed video stream at the intra-coded frames.

Compressing S2 may comprise encoding with a central video encoder 220 the digital video stream into the compressed digital video stream 104, 204 with intra-coded frames at the predetermined frame positions 102, 202 according to a predetermined encoding format.

The predetermined frame positions 102, 202 may e.g. be provided to the central video encoder 220 with a playout manager 221. Further, indications 224 may be generated in the compressed video stream that indicate the occurrences of intra-frames at the predetermined frame positions 102, 202, e.g. with an indication generator 223.

In addition, e.g. a central packetizer 222 may identify the predetermined frame positions 102, 202 in the source digital video stream 103, 203 and restart respective packetizing sequences at the predetermined frame positions 102, 202 of the compressed video stream to provide respective packets. A playout manager 221 may provide the central packetizer 222 with the predetermined frame positions 102, 202. Further, indications 224 may be generated with an indication generator 223 in the packets that indicate the occurrences of intra-frames at the predetermined frame positions 102, 202.

As alternative or in addition, metadata may be provided in the packets based on the predetermined frame positions 102, 202. The metadata may e.g. be included in a manifest of the respective packet. The method may comprise generating indications 224 in the metadata, e.g. with an indication generator 223, that indicates the occurrences of intra-frames at the predetermined frame positions 102, 202.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

### List of reference signs

- 100, 200: video distribution system
- 101, 201: central headend
- 102, 202: frame positions
- 103, 203: source digital video stream
- 104, 204: compressed digital video stream

- 110, 210: regional headend
- 111, 211: regional compressed video section
- 112, 212: regionalized digital video stream

- 215: central input interface
- 216: central output interface
- 217: regional input interface
- 218: regional output interface

- 220: central video encoder
- 221: playout manager
- 222: central packetizer
- 223: indication generator
- 224: indication

- 225: content server
- 226: triggering unit
- 227: trigger
- 228: cutter

- S1, S2, S3: method steps

## Claims

1. Video distribution system for inserting regional content into a compressed digital video stream, the video distribution system comprising:
a central headend that identifies a number of predetermined frame positions in a source digital video stream and compresses the digital video stream into the compressed digital video stream providing intra-coded frames at the identified positions in the compressed digital video stream, and
a regional headend that receives the compressed video stream and inserts a regional compressed video section into the compressed video stream at the intra-coded frames.

2. Video distribution system according to claim 1, wherein the central headend comprises a central video encoder that identifies the predetermined frame positions in the source digital video stream and encodes the digital video stream into the compressed digital video stream with intra-coded frames at the predetermined frame positions according to a predetermined encoding format.

3. Video distribution system according to claim 2, wherein the central headend comprises a playout manager coupled to the central video encoder, wherein the playout manager provides the central video encoder with the predetermined frame positions.

4. Video distribution system according to claim 2 or 3, wherein the central video encoder comprises an indication generator that generates indications in the compressed video stream that indicate the occurrences of intra-frames at the predetermined frame positions.

5. Video distribution system according to any of the preceding claims, wherein the central headend comprises a central packetizer that identifies the predetermined frame positions in the source digital video stream and restarts respective packetizing sequences at the predetermined frame positions of the compressed video stream to provide respective packets.

6. Video distribution system according to claim 5, wherein the central headend comprises a playout manager coupled to the central packetizer, wherein the playout manager provides the central packetizer with the predetermined frame positions.

7. Video distribution system according to claim 5 or 6, wherein the central packetizer comprises an indication generator that generates indications in the packets that indicate the occurrences of intra-frames at the predetermined frame positions.

8. Video distribution system according to any of the claims 5 to 7, wherein the central packetizer provides metadata in the packets based on the predetermined frame positions.

9. Video distribution system according to claim 8, wherein the central packetizer includes the metadata in a manifest of the packet.

10. Video distribution system according to claim 8 or 9, wherein the central packetizer comprises a metadata indication generator that generates indications in the metadata that indicate the occurrences of intra-frames at the predetermined frame positions.

11. Video distribution method for inserting regional content into a compressed digital video stream, the video distribution method comprising:
identifying a number of predetermined frame positions in a source digital video stream,
compressing the digital video stream into the compressed digital video stream providing intra-coded frames at the identified positions in the compressed digital video stream, and
regionally inserting a regional compressed video section into the compressed video stream at the intra-coded frames.

12. Video distribution method according to claim 11, wherein compressing comprises encoding with a central video encoder the digital video stream into the compressed digital video stream with intra-coded frames at the predetermined frame positions according to a predetermined encoding format.

13. Video distribution method according to claim 12, comprising at least one of:
with a playout manager providing the central video encoder with the predetermined frame positions;
with an indication generator generating indications in the compressed video stream that indicate the occurrences of intra-frames at the predetermined frame positions;
with a central packetizer identifying the predetermined frame positions in the source digital video stream and restarting respective packetizing sequences at the predetermined frame positions of the compressed video stream to provide respective packets.

14. Video distribution method according to claim 13, comprising at least one of:
with a playout manager providing the central packetizer with the predetermined frame positions;
with an indication generator generating indications in the packets that indicate the occurrences of intra-frames at the predetermined frame positions;
providing metadata in the packets based on the predetermined frame positions.

15. Video distribution method according to claim 14,
wherein the metadata is included in a manifest of the packet and/or
comprising a metadata indication generator generating indications in the metadata that indicate the occurrences of intra-frames at the predetermined frame positions.
